# EUROPEAN PATENT APPLICATION

(11) **EP 4 830 969 A1**
(43) Date of publication of application: **28.10.2026**
(21) Application number: 23962221.0
(22) Date of filing: 21.12.2023
(51) Int. Cl.: B60K 35/233

(54) **INFORMATION DISPLAY METHOD AND INFORMATION DISPLAY DEVICE FOR VEHICLE**

(71) Applicant: Nissan Motor Co., Ltd., Yokohama-shi, Kanagawa 221-0023 (JP)
(72) Inventor: OGISU, Takuma, Atsugi-shi, Kanagawa 243-0123 (JP); WATANABE, Hiroshi, Atsugi-shi, Kanagawa 243-0123 (JP)
(74) Representative: Osha BWB
(86) International application number: PCT/JP2023/045844
(87) International publication number: WO 2025/134301

(57) **Abstract**

Coordinates of an intersection (21) at which a right or left turn should be made according to route guidance for vehicle are acquired. An arrow-shaped virtual image (11) is displayed with the virtual image (11) superimposed on the intersection (21) visible through a windshield (2) by an AR-HUD (1). In a long-distance region where a position of the intersection (21) is within a display area (1A) of the AR-HUD (1) according to a looking-down angle (θ1) with respect to the intersection (21), the virtual image (11) is displayed on the position of the intersection (21). In a short-distance region where the position of the intersection (21) is below the display area (1A), a position of the virtual image (11) is limited to a lower portion of the display area (1A), and display is changed to animation display in which the virtual image (11) moves to-and-fro in a vehicle width direction.

## Description

### TECHNICAL FIELD

The present invention relates to an information display for a vehicle that displays virtual images on nodes, such as intersections, at which the vehicle should turn right or left, using an AR-HUD (Augmented Reality Head-Up Display).

### BACKGROUND ART

In recent years, a HUD (head-up display), which projects and displays various information necessary during driving of a vehicle on a windshield in front of a driver's seat, has become widespread. In addition, an AR-HUD (Augmented Reality Head-Up Display) is known as a technique for further evolving the HUD. This AR-HUD can overlay virtual information, consisting of virtual images, onto real information visible through the windshield, which results in less shift (movement) in the driver's viewpoint or focus as compared with a general HUD that displays information on a glass surface of the windshield.

Patent Document 1 discloses a technique for displaying guidance information of a car navigation system via an AR-HUD. For instance, it is described that a plurality of arrows arranged in a substantially L-shape are superimposed on a real scene of an intersection at which the vehicle should turn right or left.

When a virtual object, i.e., a virtual image, is displayed by the AR-HUD, a driver recognizes a distance to the object by a looking-down angle, which is a downward angle with respect to a horizontal plane. On the other hand, regarding a real intersection, the driver sitting in the driver's seat looks down at the intersection in a downward direction from the driver's viewpoint, and driver's looking-down angle to the real intersection becomes larger as the vehicle approaches the intersection.

Therefore, an appropriate display position of the virtual image, which indicates the intersection at which the vehicle should turn right or left, shifts downward as the vehicle approaches the intersection. However, as compared with the wide field of view through the windshield, a display area of the AR-HUD is limited in size, and depending on the size of the display area, the appropriate display position may be below the display area of the AR-HUD. Because of this, when the display of the virtual image such as an arrow indicating an intersection is to be continued in the display area of the AR-HUD, the virtual image can do nothing but be displayed on an upper side with respect to the real intersection position (that is, at a position on the depth side in 3D space). In consequence, the display of the virtual image is shifted with respect to the intersection at which the vehicle should turn right or left, and misidentification is likely to occur, for example, in a case where a plurality of roads where right or left turns are possible are arranged.

### CITATION LIST

### PATENT DOCUMENT

Patent Document 1: Japanese Patent No. 7088151

### SUMMARY OF THE INVENTION

An information display method for a vehicle, the method including: acquiring coordinates of a node at which a right or left turn should be made according to route guidance for the vehicle; and displaying a virtual image representing a position of the node at which the right or left turn should be made, with the virtual image being superimposed on a scene visible ahead through a windshield, by an AR-HUD of the vehicle, the method comprises: acquiring a distance between the vehicle and the node; in a long-distance region where the position of the node visible through the windshield is within a display area of the AR-HUD, displaying the virtual image on the position of the node; and in a short-distance region where the position of the node visible through the windshield is below the display area of the AR-HUD, displaying the virtual image at a lower portion of the display area of the AR-HUD, and further displaying said virtual image by animation in which said virtual image moves in a vehicle width direction.

As described above, since the display of the virtual image is changed from the normal display to the animation display when the vehicle approaches the node at which the right or left turn should be made, the driver can understand that the display position of the virtual image may deviate from the correct node position, thereby attracting driver's attention.

### RIEF DESCRIPTION OF THE DRAWINGS

Fig. 1 is an explanatory diagram of a configuration of an information display device according to an embodiment.
Fig. 2 is an explanatory diagram of a scene (view) seen through a windshield when an intersection is at a long distance.
Fig. 3 is an explanatory diagram of a scene (view) seen through the windshield when the intersection is at a short distance.
Figs. 4A to 4C are explanatory diagrams showing a relationship between a distance to an intersection and a looking-down angle.
Fig. 5 is a flow chart showing a flow of processing according to the embodiment.
Fig. 6A is an explanatory diagram of a normal display of a virtual image.
Fig. 6B is an explanatory diagram of an animation display of a virtual image.

### EMBODIMENTS FOR CARRYING OUT THE INVENTION

An embodiment of the present invention will be described below with reference to the drawings.

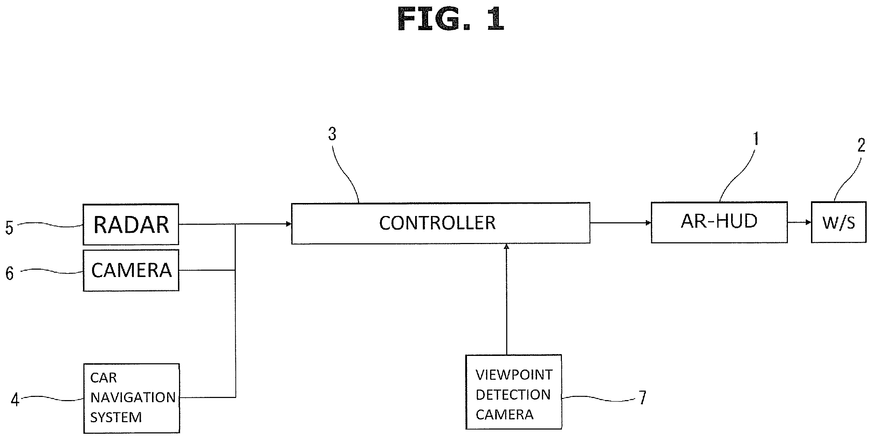

Fig. 1 is an explanatory diagram of a configuration of an information display device for a vehicle according to an embodiment. The vehicle of the embodiment is a typical automobile, and has an AR-HUD (Augmented Reality Head-Up Display) 1 for a driver's seat. This AR-HUD 1 displays virtual information with the virtual information superimposed on real information visible through a windshield 2. In the present invention, any type or formation may be possible, but a projector is provided, for instance, at a lower portion of the windshield 2, and a virtual image of the virtual information is generated on a virtual focal plane separated by an appropriate distance (e.g., several meters) in front of a driver by light reflected on a surface of the windshield 2 and reaching driver's eyes. The virtual information may include a virtual image indicating a right or left turn for route guidance to be displayed while being superimposed on an intersection as described later, and appropriate information such as a speed limit or an actual vehicle speed.

The AR-HUD 1 is controlled by a controller 3. That is, a virtual image is generated by the controller 3, and its display position is controlled by the controller 3. A so-called car navigation system 4 that performs route guidance of the vehicle using GPS is connected to the controller 3. The car navigation system 4 has map information, and this map information includes coordinate data of nodes such as intersections. In addition, the own vehicle position is specified by the car navigation system 4. The illustrated system further includes information acquisition devices such as a radar 5 and a camera 6 to detect positions of preceding vehicles, pedestrians, etc. Here, node is a component constituting a road network together with a link on a digitized road map, and represents a point such as an intersection or other junction point in the representation of the road network. Each node and each link have a unique number, and nodes are connected by a link(s) to constitute a road network. In the following description, a node at which the vehicle should turn right or left will also be referred to as an intersection.

The information display device of the embodiment using the AR-HUD 1 includes a viewpoint detection camera 7 that detects a viewpoint position of the driver, in order to appropriately set a virtual image position of AR-HUD 1. The viewpoint detection camera 7 constitutes, for instance, a part of a driver monitoring system (DMS) that monitors the state (condition) of the driver. The viewpoint detection camera 7 is disposed, for instance, at a position close to an upper edge of the windshield, while facing driver's head. The controller 3 processes images acquired by the viewpoint detection camera 7, and the driver's viewpoint position (i.e., the position of driver's pupils) is detected. The driver's viewpoint position may be detected without using the camera. For instance, the driver's viewpoint position may be detected indirectly from a driver's seating position or driver's height. The controller 3 corrects a generation position of a virtual image, i.e. an object, by the AR-HUD 1 according to the detected viewpoint position so that the real scene seen by the driver through the windshield 2 and the object of the AR-HUD 1 overlap correctly.

The controller 3 is configured as a part of functions of a vehicle-mounted computer system that performs various controls. In a mode in which route guidance is performed by the car navigation system 4, the controller 3 displays, via the AR-HUD 1, a virtual image indicating a right/left turn location necessary for route guidance, a virtual image indicating a destination, etc. The controller 3 performs acquisition of coordinates of nodes (intersections) via the car navigation system 4, creation of display data of virtual images, calculation of a distance between the own vehicle and the intersection, change of a display mode of the virtual image according to this distance, and the like.

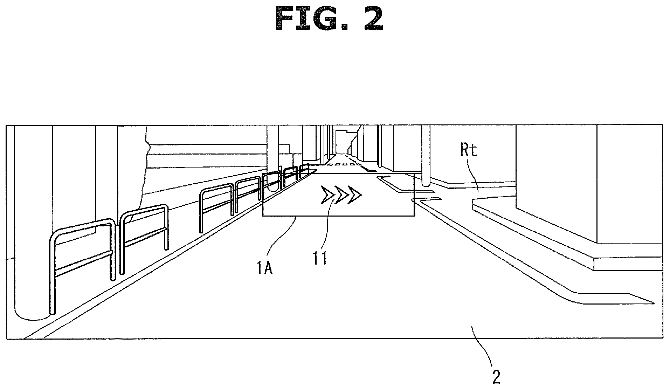

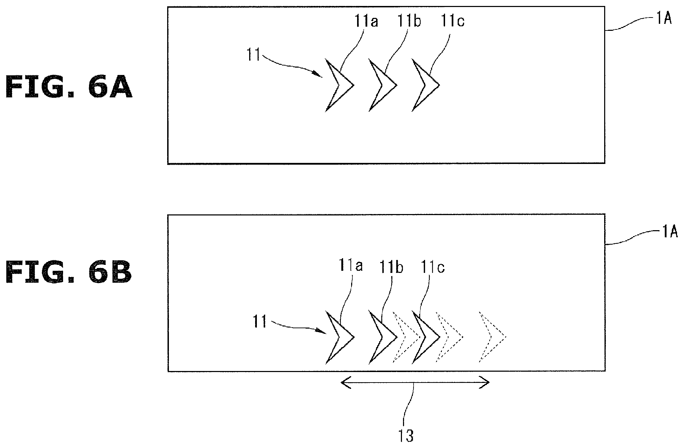

Fig. 2 is a simplified explanatory diagram showing a scene (view) seen through the windshield 2 when the vehicle approaches an intersection that is a node at which, for instance, the vehicle should turn right. A rectangular display area 1A of the AR-HUD 1 is present in a part of an area visible through the windshield 2. The display area 1A is basically located at a position in front of the driver. It is noted that a box (border) of an outer periphery of the display area 1A is not actually displayed, and is illustrated in the drawing for the purpose of explanation. As described above, various virtual information necessary during driving is displayed in this display area 1A via the AR-HUD 1. For instance, a right-pointing arrow-shaped virtual image 11 (a so-called icon) indicating that a right turn is to be made is displayed on a point of a node of an intersection so as to be superimposed on a real scene. As shown in Fig. 6A, the virtual image 11 of the illustrated example has a form in which three arrowhead-shaped segments 11a, 11b and 11c are arranged at intervals. In this example of the virtual image 11, the central segment 11b corresponds to a position of the node. The road Rt in the real space, located on the right side of this virtual image 11, is a road on which the vehicle should turn right and along which the vehicle should run. In a case where a left turn is to be made, a left-pointing arrow-shaped virtual image is displayed.

The arrow-shaped virtual image 11 is represented with appropriate color and brightness. Furthermore, the size of the virtual image 11 is calculated so that it has a constant size (for instance, a constant width) at the intersection in 3D space. Therefore, in the display area 1A, if the distance to the intersection is long, the virtual image 11 is displayed smaller, and as the distance becomes shorter, it is displayed relatively larger.

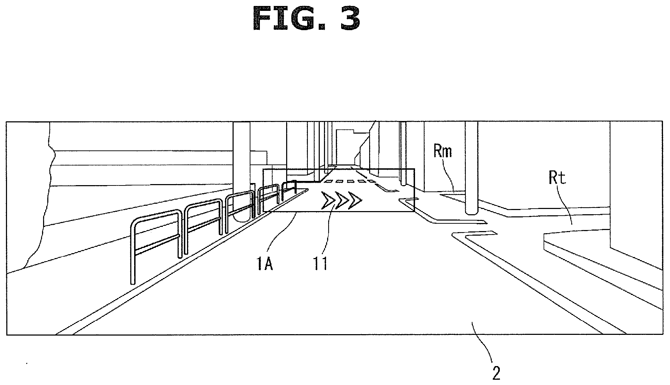

Fig. 3 is an explanatory diagram when the vehicle further approaches the intersection from the state of Fig. 2. As described above, as the vehicle approaches the intersection, the looking-down angle with respect to the intersection from the viewpoint of the driver becomes larger. Therefore, the display position of the virtual image 11, which is calculated based on its positional relationship with this intersection, gradually moves downward and reaches a lower edge of the display area 1A, as shown in Fig. 3. Fig. 6B is an explanatory diagram of the display area 1A at this time. The display position of the virtual image 11 is limited at a lower limit position shown in Figs. 3 and 6B. That is, a state in which the entire virtual image 1 including the three segments 11a to 11c is displayed in the lower portion of the display area 1A is a lower limit, and no part of the image is missing. Then, when the virtual image 11 reaches the lower limit of the display area 1A, more specifically, immediately before that, the display of the virtual image 11 is switched to an animation display in which the virtual image 11 moves in a vehicle width direction.

As illustrated in Fig. 6B, in one example of the animation display, the display position of the virtual image 11 is changed to-and-fro in the vehicle width direction as indicated by an arrow 13. For instance, it can be displayed as if it is moving to-and-fro in a cycle of about several Hz. Variation in the display position is defined by an angle in the vehicle width direction. With this, even if the distance to the intersection changes, the form of the change to-and-fro becomes similar figures.

In another example of the animation display, by sequentially lighting and displaying the three segments 11a, 11b, and 11c arranged in the vehicle width direction, which constitute the virtual image 11, the arrow-shaped virtual image 11 can be displayed as if it is flowing in its pointing direction.

As shown in Fig. 3, in a situation where the virtual image 11 is limited to the lower limit position of the display area 1A, the display position of the virtual image 11 is positioned at a relatively upper side with respect to the original ideal display position corresponding to the road Rt on which the vehicle should turn right. Therefore, from the driver's viewpoint, the virtual image 11 appears to be located on the depth side with respect to the road Rt on which the driver should turn right in the real 3D space. Therefore, in the embodiment, when such a positional relationship is established, the display of the arrow-shaped virtual image 11 is switched to the animation display in which the virtual image 11 moves to-and-fro from right to left or vice versa, thereby attracting the driver's attention. For instance, in the example shown in Fig. 3, there is another road Rm on the depth side with respect to the road Rt on which the right turn should be made, and misidentification is likely to occur when the two roads are relatively close to each other. By using the animation to draw attention, the driver can understand that the position of the arrow-shaped virtual image 11 may be misaligned with the road Rt (may deviate from the road Rt), and thus misidentification is suppressed.

In a more preferred embodiment, the period (cycle) of the animation display changes stepwise or continuously so that the shorter the distance from the vehicle to the intersection becomes, the shorter the period (cycle) of the animation display becomes.

In this manner, the driver can intuitively know that the vehicle is approaching the intended intersection through the periodic changes in the animation display. It is therefore possible to surely suppress misidentification of the road on which the right turn should be made.

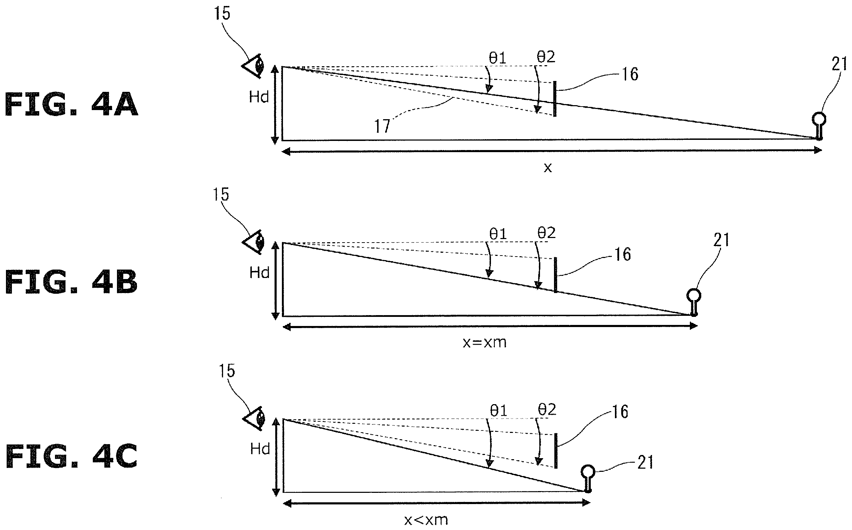

Figs. 4A to 4C are explanatory diagrams of the looking-down angle described above. The driver is looking down at the real intersection 21 from driver's viewpoint 15, and a looking-down angle θ1 at that time is geometrically determined by the height Hd from a road surface to the viewpoint 15 and a distance x from the own vehicle to the intersection 21. This looking-down angle θ1 with respect to the intersection 21 is defined as a "first looking-down angle". Furthermore, a surface denoted by a reference numeral 16 in the drawing indicates a virtual focal plane on which a virtual image is generated by the AR-HUD 1. This focal plane 16 is located outside the windshield 2, that is, in front of the vehicle. A contour of this focal plane 16 becomes the display area 1A of the AR-HUD 1. A triangle denoted by a reference numeral 17 indicates a viewing angle (visual angle) at which the driver sees the display area 1A of the AR-HUD 1. A looking-down angle θ2 is determined by a line of sight with respect to the lower edge of the display area 1A. This looking-down angle θ2 with respect to the lower edge of the display area 1A is defined as a "second looking-down angle".

At a distance x illustrated in Fig. 4A, the first looking-down angle θ1 is smaller than the second looking-down angle θ2, and the intersection 21 is visible within the display area 1A of the AR-HUD 1. Therefore, the display position of the virtual image 11, calculated based on the position coordinates of the intersection 21, is within the display area 1A of the AR-HUD 1.

When the distance x becomes shorter, as illustrated in Fig. 4B, the first looking-down angle θ1 becomes equal to the second looking-down angle θ2. A distance x at this time is defined as a lower limit distance xm. In this state, the virtual image 11 is displayed on the lower edge of the display area 1A of the AR-HUD 1 (the size of the virtual image 11 is ignored). Then, as illustrated in Fig. 4C, in a region where the distance x is shorter than the lower limit distance xm, the virtual image 11 cannot be displayed any more at the correct position corresponding to the position coordinates of the intersection 21.

Therefore, in the embodiment, the display of the virtual image 11 is switched from the normal display to the animation display before (preferably, immediately before) the first looking-down angle θ1 becomes equal to or greater than the second looking-down angle θ2.

In other words, in a process in which the virtual image 11 approaches the lower edge of the display area 1A of the AR-HUD 1 as the vehicle approaches the intersection 21, it is desirable that the animation display begin at a distance x at which the entire virtual image 11 can be displayed within the display area 1A.

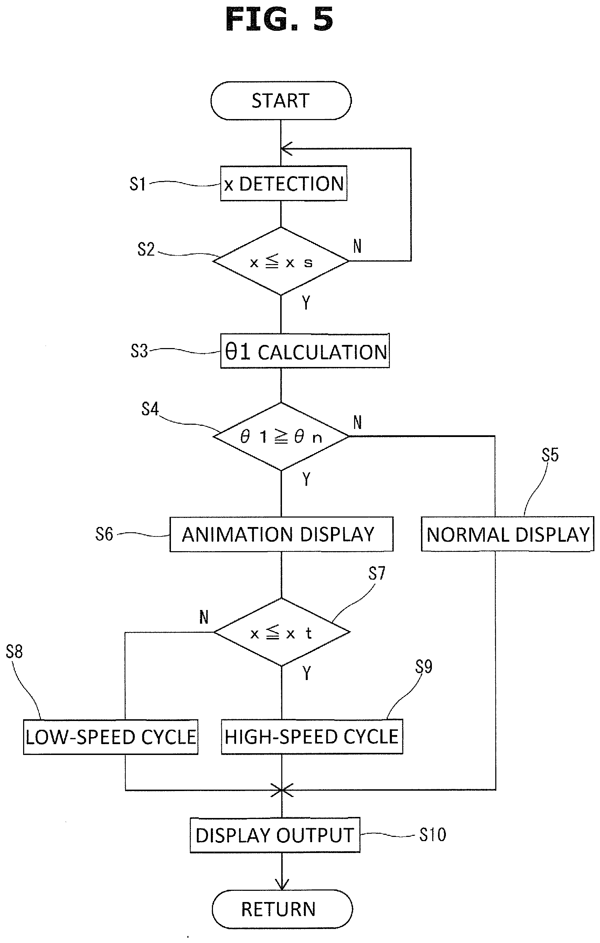

Fig. 5 is a flow chart showing a flow of processing of intersection display that is repeatedly executed when the car navigation system 4 determines a node (an intersection) at which a right or left turn should be made and the information display device is instructed to display it. First, in step 1, a distance x from the vehicle to the intersection 21 is detected. In step 2, it is determined whether this distance x has become equal to or less than a predetermined threshold value xs by which display should begin.

When the vehicle approaches a target (an intended) intersection 21 and the distance x becomes equal to or less than the threshold value xs, the routine proceeds from step 2 to step 3, and the first looking-down angle θ1 is calculated based on the distance x. Then, in step 4, it is determined whether the first looking-down angle θ1 becomes equal to greater than a predetermined threshold value θn. The threshold value θn is set by subtracting an appropriate, relatively small margin from the second looking-down angle θ2 shown in Figs. 4A to 4C. This margin is provided so that, as described above, the animation display starts near the limit where the entire virtual image 11 can be displayed within the display area 1A.

If the first looking-down angle θ1 is less than the threshold value θn, the routine proceeds from step 4 to step 5, and the display becomes a normal display without the animation. Then, in step 10, the virtual image 11 is superimposed and displayed by the AR-HUD 1. As described above, the display position of the virtual image 11 is calculated according to the positional relationship between the coordinates of the own vehicle and the coordinates of the intersection 21, and always corresponds to the position of the real intersection 21 (in other words, the road Rt on which a right or left turn should be made).

In step 4, if it is determined that the first looking-down angle θ1 is equal to or greater than the predetermined threshold value θn, the routine proceeds from step 4 to step 6, and the animation is displayed. In this animation display, the display position of the virtual image 11 is limited to the lower limit position of the display area 1A. Next, the routine proceeds to step 7, and it is determined whether the distance x has become equal to or less than a predetermined threshold value xt by which the period (cycle) of the animation display is changed. If it is determined that the distance x is greater than the threshold value xt, the routine proceeds to step 8, and a slow period (a low-speed cycle) is selected as the animation display period. If the distance x is equal to or less than the threshold value xt, the routine proceeds to step 9, and a fast period (a high-speed cycle) is selected as the animation display period. For instance, when the distance x is about 20 to 30 m, a period of about 2 Hz is set, and when the distance x becomes shorter than this distance, a period of about 4 Hz is set. In step 10, the animation of the virtual image 11 is displayed via the AR-HUD 1 according to the selected period.

In this example, the animation display period is changed in two stages, but it is also possible to control the period in more stages. Alternatively, the period may be continuously varied according to the distance x.

Here, when the period (cycle) of the animation display is changed stepwise, the number of stages of the periodic change may be variable according to the road conditions on which the vehicle is travelling. For instance, when the distance between consecutive intersections is long, the number of stages is reduced (e.g., two stages of 2Hz and 4Hz), and when the distance between consecutive intersections is short, the number of stages is increased (e.g., three stages of 2Hz, 4Hz, and 8Hz). The shorter the interval of the intersections, the more the misidentification of the road on which a right or left turn should be made likely to occur due to the deviation (misalignment) of the display position of the virtual image 11. Therefore, increasing the number of stages can attract the driver's attention so as not to mistake the road.

Similarly, the number of stages in the periodic change may be varied based on the vehicle speed. For instance, when the vehicle speed is high, the number of stages is reduced (e.g., two stages of 2Hz and 4Hz), and when the vehicle speed is low, the number of stages is increased (e.g., three stages of 2Hz, 4Hz, and 8Hz). This is based on the fact that the vehicle speed is generally lower in urban areas where intersecting roads appear at short intervals, and that the vehicle speed is generally higher when driving in suburban areas where intersecting roads are spaced far apart.

Instead of changing the period (cycle) of the animation display described above, the brightness of the animation display may be changed. In one example, the brightness of the animation display is changed stepwise or continuously so that the shorter the distance x, the darker the brightness. By making the brightness gradually darker, the driver can understand that the vehicle is approaching the intended intersection at which a right or left turn should be made.

The animation display may be ended and returned to the normal display of the virtual image 11 when the operation of a direction indicator by the driver is detected. Alternatively, the display of the virtual image 11 may be ended when the operation of the direction indicator by the driver is detected. It is considered that when the driver operates the direction indicator, the driver has already recognized the road on which the turn should be made.

Although the embodiment of the present invention has been described, the present invention is not limited to the above embodiment, and various modifications are possible. For instance, the formation or design of the virtual image 11 is not limited to those shown in Figs. 6A and 6B, and the present invention can be applied to virtual images of any other shape.

## Claims

1. An information display method for a vehicle,
the method including:
acquiring coordinates of a node at which a right or left turn should be made according to route guidance for the vehicle; and
displaying a virtual image representing a position of the node at which the right or left turn should be made, with the virtual image being superimposed on a scene visible ahead through a windshield, by an AR-HUD of the vehicle,
the method comprising:
acquiring a distance between the vehicle and the node;
in a long-distance region where the position of the node visible through the windshield is within a display area of the AR-HUD, displaying the virtual image on the position of the node; and
in a short-distance region where the position of the node visible through the windshield is below the display area of the AR-HUD, displaying the virtual image at a lower portion of the display area of the AR-HUD, and further displaying said virtual image by animation in which said virtual image moves in a vehicle width direction.

2. The information display method for the vehicle as claimed in claim 1, further comprising
in a process in which the virtual image approaches a lower edge of the display area as the vehicle approaches the node, starting the animation display at a distance at which the entire virtual image can be displayed within the display area.

3. The information display method for the vehicle as claimed in claim 2, further comprising:
determining a viewpoint position of a driver;
determining a first looking-down angle with respect to the node from the viewpoint position;
determining a second looking-down angle with respect to the lower edge of the display area of the AR-HUD from the viewpoint position; and
starting the animation display before the first looking-down angle becomes equal to or greater than the second looking-down angle.

4. The information display method for the vehicle as claimed in claim 1, wherein
a cycle of the animation display is changed stepwise or continuously so that the shorter the distance is, the shorter the cycle of the animation display is.

5. The information display method for the vehicle as claimed in claim 1, wherein
brightness of the animation display is changed stepwise or continuously so that the shorter the distance is, the darker the brightness is.

6. The information display method for the vehicle as claimed in claim 1, wherein
the animation display is ended and returned to a normal display of the virtual image when an operation of a direction indicator by the driver is detected.

7. The information display method for the vehicle as claimed in claim 1, wherein
the display of the virtual image is ended when an operation of a direction indicator by the driver is detected.

8. The information display method for the vehicle as claimed in claim 1, wherein
the virtual image has a shape having directivity that indicates a direction in which a right or left turn should be made at the node.

9. The information display method for the vehicle as claimed in claim 1, wherein
a size of the virtual image displayed in the display area is changed according to the distance to the node so as to correspond to a constant size at the node in a real space.

10. The information display method for the vehicle as claimed in claim 1, wherein
the animation is displayed by changing a display position of the virtual image to-and-fro in the vehicle width direction.

11. The information display method for the vehicle as claimed in claim 10, wherein
variation in the to-and-fro change is defined by an angle in the vehicle width direction.

12. The information display method for the vehicle as claimed in claim 1, wherein
the virtual image is formed by a plurality of segments arranged in the vehicle width direction, and
the animation is displayed by sequentially lighting and displaying the plurality of segments.

13. The information display method for the vehicle as claimed in claim 1, wherein
a cycle of the animation display is changed stepwise so that the shorter the distance is, the shorter the cycle of the animation display is, and
when a distance between consecutive intersections is short, the number of stages of change in the cycle of the animation display is increased, as compared with that when the distance between consecutive intersections is long.

14. The information display method for the vehicle as claimed in claim 1, wherein
a cycle of the animation display is changed stepwise so that the shorter the distance is, the shorter the cycle of the animation display is, and
when vehicle speed is low, the number of stages of change in the cycle of the animation display is increased, as compared with that when the vehicle speed is high.

15. An information display device for a vehicle comprising:
a node coordinate acquisition unit configured to acquire coordinates of a node at which a right or left turn should be made according to route guidance for the vehicle;
an AR-HUD configured to display a virtual object, with the virtual object being superimposed on a scene visible ahead through a windshield; and
a control unit configured to control the AR-HUD so as to display a virtual image, as the object, at a position of the node at which the right or left turn should be made,
wherein the control unit is further configured to
acquire a distance between the vehicle and the node;
in a long-distance region where the position of the node visible through the windshield is within a display area of the AR-HUD, display the virtual image on the position of the node; and
in a short-distance region where the position of the node visible through the windshield is below the display area of the AR-HUD, display the virtual image at a lower portion of the display area of the AR-HUD, and further display said virtual image by animation in which said virtual image moves in a vehicle width direction.
